# EUROPEAN PATENT SPECIFICATION

(11) **EP 3 312 650 B1**
(45) Date of publication and mention of the grant of the patent: **04.11.2026**
(21) Application number: 17203977.8
(22) Date of filing: 15.09.2010
(51) Int. Cl.: G02B 6/44, G02B 6/36

(54) **TRANSISTION DEVICE FOR AN OPTICAL FIBER CONNECTION SYSTEM**
UMSCHALTVORRICHTUNG FÜR EIN GLASFASERVERBINDUNGSSYSTEM
DISPOSITIF DE TRANSITION POUR UN SYSTÈME DE CONNEXION PAR FIBRE OPTIQUE

(30) Priority: 29.10.2009 US 608230
(43) Date of publication of application: 25.04.2018
(62) Document number(s) of the earlier application(s) in accordance with Art. 76 EPC: 10757678.7 / 2 494 395
(73) Proprietor: CommScope North Carolina, LLC, Claremont, NC 28610 (US)
(72) Inventor: KOLESAR, Paul, Hickory, North Carolina 28602 (US)
(74) Representative: HGF

(56) References cited:
- EP-A2- 1 462 835
- WO-A2-02/44782
- WO-A2-99/13367
- US-A1- 2006 275 007
- US-B1- 6 364 539

## Description

### Field of the Invention

The present invention is directed to transition devices for an optical fiber connection system.

### Background of the Invention

Optical fibers, both multi-mode and single mode, are commonly used for the transmission of signals of all sorts, including communication and data signals. Communications systems often transmit signals between transceivers (i.e., devices that can both transmit and receive optical signals) via different fibers in each direction. More specifically, one or more fibers will transmit signals from the first transceiver to the second, and one or more of the other fibers will transmit signals from the second transceiver to the first. In this manner, optical signals are not traveling along the same fiber in different directions.

This arrangement would be fairly simple to organize for two transceiver devices that are permanently optically connected, but in practice transceivers are typically connected through a much larger network of optical fibers, connectors and patch panels. For example, a common optical system includes multiple transceivers at one end, 2-fiber patch cords that are connected to the transceivers and to duplex adapters mounted on a patch panel, a fan-out transition device connected to the duplex adapters that connects to a multi-strand fiber optic trunk cable (12 fibers per cable is common, and the fiber strands may be in ribbon form) via an array adapter, a second fan-out transition device connected to the opposite end of the optic trunk cable via a second array adapter, and corresponding transceivers connected via 2-fiber patch cords to the second fan-out transition device through duplex adapters. Thus, it is important to be able to track individual optical fibers in the various devices and cables between the transceivers in order to ensure that the individual transceivers are connected as desired.

To ensure intermateability of cabling components and signal polarity, standards have been created to define arrangements of fibers, cables, adapters and connectors. For example, one such standard for array connectors, TIA-604-5B, is directed to multi-fiber push-on (MPO) fiber optic connector intermateability. Another standard, TIA 568-B.3 with addendum No. 7 written by committee TR-42.8, is directed to maintaining optical fiber polarity with systems using array connectors and adapters, including MPOs. Systems built using these methods utilize fiber optic cables, adapters, transition devices and patch cords that are typically partially or completely unique to one of these methods.

In some instances, transceivers may utilize less than all of the fibers of the trunk cable. For example, a transceiver may have only four channels, each of which has a "transmit" fiber and a "receive" fiber. Commonly, two such transceivers would utilize the outer four fibers on either end of a 12-fiber trunk cable; i.e., the transmit fibers would use fibers 1-4 of the trunk cable, and the receive fibers would use fibers 9-12 of the trunk cable. Thus, the devices would occupy only eight of the 12 fibers of a 12-fiber trunk cable, which would result in inefficient use of the trunk cable. However, adding more transceivers onto the trunk cable in order to utilize all of the trunk cable fibers may complicate the connection scheme. As such, it may be desirable to provide schemes and accompanying devices that enable multiple transceivers having fewer than 12 fibers to connect with proper polarity via an available 12-fiber trunk cable.

A different situation may also arise when a transceiver has more than 6 channels (12 fibers); for example, a pair of transceivers may have 12 or 18 channels. It may also be desirable to provide schemes and devices that enable such transceiver to utilize 12-fiber trunk cables.

WO 02/44782 A2 discloses an apparatus and method to provide a connection for distinct optical channels between at least two optical devices using multiple optical fibers where the connection may have a pre-selected and different channel order at either end of the connection.

WO 99/13367 A2 discloses a component for cross-connecting optofibres. To simplify handling of optofibre ribbons, there is provided a component for cross-connecting optofibres between different fibre ribbons, where the component per se cross-connects optofibres between different fibre ribbons connected to the component. The component enables a fibre ribbon structure to be retained and undivided, even after cross-connecting or otherwise reorganising the optofibres in one or more fibre ribbons.

EP 1462835 A2 discloses a three dimensional optical circuit featuring an optical manifold for organizing, guiding and protecting individual optical fibers. The manifold has a number of input openings in a first ordered arrangement at one end connected by passageways to a number of output openings in a second ordered arrangement at the opposite end. A plurality of optical fibers may be directed through the passageways of the manifold to produce a three dimensional optical circuit such as a shuffle. The optical manifold may be used in conjunction with a number of connections or terminations to form a various optical modules. These modules may be configured for rack mounting within enclosures for electrical components.

US 2006/0275007 A1 discloses a fan-out unit for a data communication system including: a plurality of optical fibers; and a faceplate with a plurality of ports arranged in at least one row, each of the ports being optically interconnected with a respective one of the optical fibers and configured to receive a mating optical fiber. The faceplate includes a first visual indicia associated with the ports that indicates an arrangement in which mating optical fibers are to be inserted into the ports, the first visual indicia being easily readable when the faceplate is in either a first horizontal orientation or a first vertical orientation, but not being easily readable when the faceplate is in a second horizontal orientation that is inverted from the first horizontal orientation or a second vertical orientation that is inverted from the first vertical orientation.

US 6364539 B1 discloses a stackable multi-fiber ferrule enabling relatively tighter stacking between fiber arrays, resulting in increased interconnection density. Tighter stacking is achieved by incorporating an inner support member having alignment pin grooves on only one side, thereby permitting the thickness of the support member to be reduced. Thus, the thickness of the inner support member may be thinner than that of conventional support members because the inner support member does not have to accommodate opposing alignment pin grooves on both sides thereof. Thus, a multi-fiber stackable ferrule will have alignment pin holes on alternating rows of fibers, that is, on every other interface between adjacent support members, thereby providing improved interconnection density.

### Summary of the Invention

According to the present invention, there is provided a transition device for an optical fiber connection system as defined in claim 1 of the appended claims.

Also disclosed, but not within the scope of the claims, is a telecommunications system comprising: a trunk cable comprising at least four optical fibers and terminals at opposite ends of the fibers, the terminals including a plurality of ports arranged in a row or multiple rows and divided by respective axis of symmetry, each of the optical fibers being associated with a respective one of the trunk terminal ports, and arranged so that the position of the trunk port on one end of a fiber is in the mirror image position about the respective axis of symmetry to the position of the trunk port on the opposite end of the fiber; and two identically arranged transition devices of the type described in the first aspect. The transition devices are connected to the opposite ends of the trunk cable such that the ports of the trunk cable terminals are aligned with the ports of the transition device trunk end terminals. Keying may be used on the end terminals and within the aligning adapters to ensure the intended orientation of the mated end terminals to each other.

Also disclosed, but not within the scope of the claims, is a transition device for an optical fiber connection system adapted to interconnect a plurality of trunk cables with a single transceiver. The transition device comprises: a first set of at least four optical fibers, each of the optical fibers having a trunk end and a transceiver end; a single transceiver end terminal having a plurality of transceiver ports, possibly arranged in a multiple rows, each port connected with a respective one of the set of optical fibers at its transceiver end, wherein a first axis of symmetry divides the ports; and a plurality of trunk end terminals, each of the trunk end terminals having a plurality of trunk ports possibly arranged in a single row, each of the trunk ports receiving a respective one of the set of optical fibers at its trunk end. The arrangement of fibers in the transition device is configured such that the order of optical fibers within the trunk end terminals and the order of the trunk end terminals with respect to each other are arranged to produce a mirror image pattern of symmetry, the symmetry being achieved when transmitting fibers and corresponding receiving fibers are located in their respective mirror image positions about the centerline of a generally horizontally arranged array of the trunk end terminations.

Also disclosed, but not within the scope of the claims, is a telecommunications system, comprising: at least two trunk cables each comprising at least four optical fibers and terminals at opposite ends of the fibers, the terminals including a plurality of ports, possibly arranged in a single row, and divided by respective axis of symmetry, each of the optical fibers being associated with a respective one of the trunk terminal ports, and arranged so that the position of the trunk port on one end of a fiber is in the mirror image position about the respective axis of symmetry to the position of the trunk port on the opposite end of the fiber; and two identically arranged transition devices of the type and meeting the conditions described in the third aspect. The transition devices are connected to the opposite ends of the trunk cables such that the ports of the trunk cable terminals are aligned with the ports of the transition device trunk end terminals. Keying may be used on the end terminals and within the aligning adapters to ensure the intended orientation of the mated end terminals to each other. The transition devices are configured such that the order of optical fibers within the trunk end terminals and the order of the trunk end terminals with respect to each other within both transition devices are arranged to produce a mirror image pattern of symmetry, the symmetry being achieved when transmitting fibers and corresponding receiving fibers are located in their respective mirror image positions about the centerline of a generally horizontally arranged array of the trunk end terminations.

### Brief Description of the Figures

Figure 1 is an end view of a fiber optic terminal (not within the scope of the claims) showing only eight of twelve ports in use.
Figure 2 is a top view of a transition device (not within the scope of the claims).
Figure 3 is a top view of a telecommunications system (not within the scope of the claims)that employs two transition devices of Figure 2.
Figure 4 is a top view of a transition device.
Figure 5 is a top view of a transition device.
Figure 6 is a top view of a transition device.
Figure 7 is a top view of a transition device (not within the scope of the claims).
Figure 8 is a top view of a transition device.
Figure 9 is a top view of a transition device.
Figure 10 is a top view of a transition device.
Figure 11 is a top view of a transition device (not within the scope of the claims).
Figure 12 is a top view of a transition device according to an embodiment of the present invention.
Figure 13 is a top view of telecommunications system that employs two transition devices of Figure 12.
Figure 14 is a schematic top view of the transition device of Figure 2 (not within the scope of the claims) embodied as a cassette.
Figure 15 is a schematic perspective view of a transition device that has upper and lower rows of ports in its trunk end terminal.
Figure 16 is a schematic perspective view of a transition device (not within the scope of the claims).
Figure 17 is a schematic perspective view of a transition device (not within the scope of the claims) that has two rows of fibers divided by a vertical axis of symmetry.
Figure 18 is a schematic view of a telecommunications system (not within the scope of the claims) that employs two transition devices of Figure 17.
Figure 18A is an end view of a transceiver of Figure 18 (not within the scope of the claims) showing a possible transmitting and receiving channel arrangement.
Figure 19 is a schematic view of a telecommunications system (not within the scope of the claims) that employs two transition devices of Figure 16.
Figure 19A is an end view of a transceiver of Figure 19 (not within the scope of the claims) showing a possible transmitting and receiving channel arrangement.
Figures 20-23 are end views of an exemplary patch panel (not within the scope of the claims) that can be employed with devices such as those shown in Figures 16 and 19, wherein the patch panel is shown in inverted horizontal configurations (Figures 20 and 21) and inverted vertical configurations (Figures 22 and 22).
Figure 24 is a schematic perspective view of a transition device (not within the scope of the claims) that has three rows of fibers divided by a vertical axis of symmetry.
Figure 24A is an end view of a transceiver of Figure 24 (not within the scope of the claims) showing a possible transmitting and receiving channel arrangement.
Figure 25 a schematic perspective view of a transition device (not within the scope of the claims) that has three rows of fibers divided by a vertical axis of symmetry.
Figure 26 is a schematic view of a telecommunications system (not within the scope of the claims) that employs two transition devices of Figure 24.
Figure 27 is a top view of the system of Figure 26 (not within the scope of the claims) with the trunk cables and the fibers of one transition device inverted to facilitate maintenance and testing.
Figure 28 is a perspective view of the system of Figure 27 (not within the scope of the claims).

### Detailed Description

The present invention will now be described more fully hereinafter, in which preferred embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, like numbers refer to like elements throughout, and the thickness of lines, layers and regions may be exaggerated for clarity.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. As used herein the term "and/or" includes any and all combinations of one or more of the associated listed items.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

Well-known functions or constructions may not be described in detail for brevity and/or clarity.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

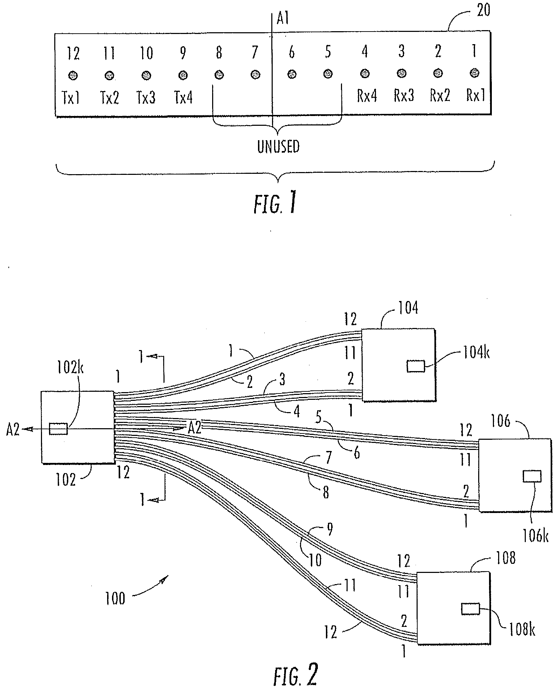

Turning now to the drawings, an exemplary fiber arrangement for a 12-fiber terminal of fiber optic system, designated broadly at **20,** is shown in **Figure 1****.** As can be seen therein, the fiber arrangement includes ports 1 through 12 arranged in a single horizontal row. As indicated in **Figure 1****,** for a 4 channel transceiver that utilizes 8 fibers, fibers 1-4 may be used for receipt for channels 1-4, and fibers 9-12 may be used for transmission for channels 4-1. In such an instance, fibers 5-8 would be unused. The port arrangement of this terminal contains a vertical axis of symmetry, **A1,** which divides the interface between the center port positions 6 and 7. A mirror image exists about the axis **A1** wherein each transmitter port can be associated with a corresponding receiver port located in the symmetrical position across the axis **A1,** and each unused port can be associated with a corresponding unused port located in the symmetrical position across the axis **A1.**

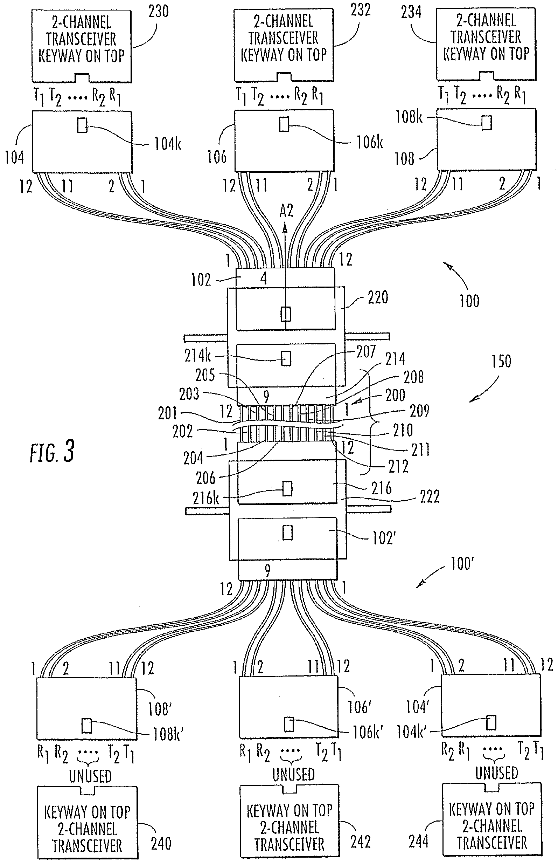

Turning now to **Figure 2****,** a transition device in the form of a fan-out unit, designated broadly at **100,** is shown therein. At one end, a terminal **102** that is configured to be connected with a 12-fiber trunk cable (such as cable **200** shown in **Figure 3**) has twelve ports arranged in a row that are associated with twelve fibers 1-12. The trunk end terminal **102** includes an alignment key **102k** on its upper surface to ensure proper alignment with the trunk cable (the configuration of the alignment key **102k** will be well understood to those skilled in this art and need not be described in detail herein).

Referring still to **Figure 2****,** three terminals **104, 106, 108** are attached at the opposite ends of the fibers 1-12. Each of the terminals **104, 106, 108** may be sized to fit a 12-fiber adapter on a transceiver. However, each terminal receives only four of the 12 fibers that originate in the trunk end terminal **102.** More specifically, fibers 1-4 are routed to the terminal **104,** where they occupy, respectively, ports 12, 11, 2 and 1 of the terminal **104.** Fibers 5-8 are routed to the terminal **106,** where they occupy ports 12, 11, 2 and 1 thereof. Finally, fibers 9-12 are routed to the terminal **108** where they occupy ports 12, 11, 2 and 1 thereof. Importantly, the arrangement of occupied ports within terminals **104** and **108** is the same. Also, each of the terminals **104, 106, 108** includes a respective alignment key **104k, 106k, 108k** on its upper surface.

It can be seen that the terminals **104** and **108** receive fibers that originate from "mirror image" ports on terminal 102. More specifically, assuming the presence of an axis of symmetry **A2** that extends vertically between the ports from which fibers 6 and 7 originate (see axis of symmetry **A1** in **Figure 1**), fibers 1-4 connect with terminal 104, and mirror image fibers 9-12 (i.e., ports that are the mirror image of ports 1-4 across the axis of symmetry **A2**) connect with terminal **108.** It can also be seen that the terminal **106** receives only fibers that originate from ports that have mirror image ports associated with other fibers received in the terminal **106.** That is, fibers originating from ports 5 and 6 have mirror image fibers that originate from ports 7 and 8.

It has been discovered that, when a transition device has fibers and terminals that follow one of the two conditions described above, the transition device can be employed in a telecommunication system that includes multiple transceivers that require fewer than all of the fibers of a connecting trunk cable, and that the same transition device can be employed on both ends of the trunk cable (thereby simplifying manufacturing, connectivity, and the like). To restate the conditions to be met by the terminals and fibers, each of the transceiver end terminals either (a) receives fibers that originate from mirror image ports in the trunk end terminal (as is the case with the transceiver end terminal **106** described above), or (b) has a corresponding transceiver end terminal with the same arrangement of occupied ports, wherein the corresponding transceiver end terminal receives fibers that originate from mirror image ports in the trunk end terminal (as is the case with the transceiver end terminals **104, 108** above).

Referring now to **Figure 3****,** the use of transition devices of **Figure 2** in a telecommunications system, designated broadly at **150,** is shown therein. The system **150** includes a trunk cable **200** that includes twelve optical fibers **201-212** that extend between terminals **214, 216.** An exemplary trunk cable is discussed in U.S. Patent No. 7,184,635 to Livingston. Each of the terminals **214, 216** includes a key **214k, 216k** on its upper surface. The terminals **214, 216** are inserted into "key-up to key-up" (i.e. aligned key) array adapters **220, 222** (*e.g*., MPO-type adapters). A transition device **100** is attached to the adapter **220** via the insertion of the trunk end terminal **102** into the adapter **220.** The transceiver end terminals **104, 106, 108** are connected with, respectively, transceivers **230, 232, 234,** with their keys **104k, 106k, 108k** being received in corresponding "key-up to key-up" receptacles in the transceivers **230, 232, 234.** The trunk end terminal **102'** of a second identical transition device **100'** is connected to the terminal **216** of the trunk cable **200** via the array adapter **222.** Transceiver end terminals **108', 106', 104'** are connected to transceivers **240, 242, 244** with their alignment keys **108k', 106k', 104k'** received in receptacles therein. Notably, the fiber designated as fiber 1 in the transition device **100** extends from the leftmost port of the terminal **102,** whereas the fiber designated as fiber 1 in the transition device **100'** extends from the rightmost port of its terminal **102'** because the transition device **100'** is inverted 180 degrees from the orientation of transition device **100.**

One can follow a signal to recognize that this arrangement enables the transceivers **230, 232, 234** to communicate with the transceivers **240, 242, 244.** For example, starting at the leftmost port of the transceiver **230,** a signal is transmitted from transmitter **T1** and travels along the leftmost fiber (labeled fiber 12 in **Figure 3**) that exits transceiver end terminal **104** to the port labeled position 1 in the trunk end terminal **102.** From here, the signal travels through the terminal **214** of the trunk cable **200** to the leftmost fiber **201** thereof.

Continuing along this path, the signal exits the leftmost port of the terminal **216** and enters the leftmost port of the trunk end terminal of the transition device **100'** (labeled position 12 in **Figure 3**). The signal then travels along the leftmost fiber to the terminal **108'** of the transition device, entering the leftmost port (labeled 1 in **Figure 3**), where it reaches receiver **R1** of the transceiver **240.**

A return signal can then be transmitted from transmitter **T1** of transceiver **240** to receiver **R1** of the transceiver **230.** The signal generated by **T1** travels through the rightmost port (labeled position 12 in **Figure 3**) of the transceiver end terminal **108'** of the transition device **100',** then through the rightmost fiber exiting the terminal **108'** to the fourth port from the left (labeled position 9 in **Figure 3**) of the trunk end terminal **102**'. The signal then enters the terminal **216** of trunk cable **200** at the fourth position from the left and travels through the corresponding fiber **204** to the terminal **214,** exiting the port (labeled 9 in **Figure** 3) that is fourth from the left. The signal then enters the trunk end terminal **102** of the transition device **100** through the fourth port from the left (labeled position 4 in **Figure 3**) and travels along the rightmost fiber connected to the terminal **104** and enters the rightmost port thereof (labeled position 1). From there, the signal passes through the terminal **104,** enters the transceiver **230,** and is received in the receiver **R1**. Thus, signals can be passed from the transmitter **T1** of transceiver **230** to the receiver **R1** of transceiver **240,** and from the transmitter **T1** of transceiver **240** to the receiver **R1** of transceiver **230,** thereby forming a complete transmit/receive channel between these devices.

Similar tracing of the signal paths of transmitter **T2** of transceiver **230** to receiver **R2** of transceiver **240** and of transmitter **T2** of transceiver **240** to receiver **R2** of transceiver **230** shows the presence of another complete transmit/receive channel. The same exercise can show that the transceivers **232, 242** form two transmit/receive channels, as do transceivers **234, 244.** As such, the interconnection of the transceivers in a "key-up to key-up" arrangement can be accomplished with two identical transition devices **100, 100',** even though the transceivers each use only four of the twelve available fibers of the trunk cable **200.**

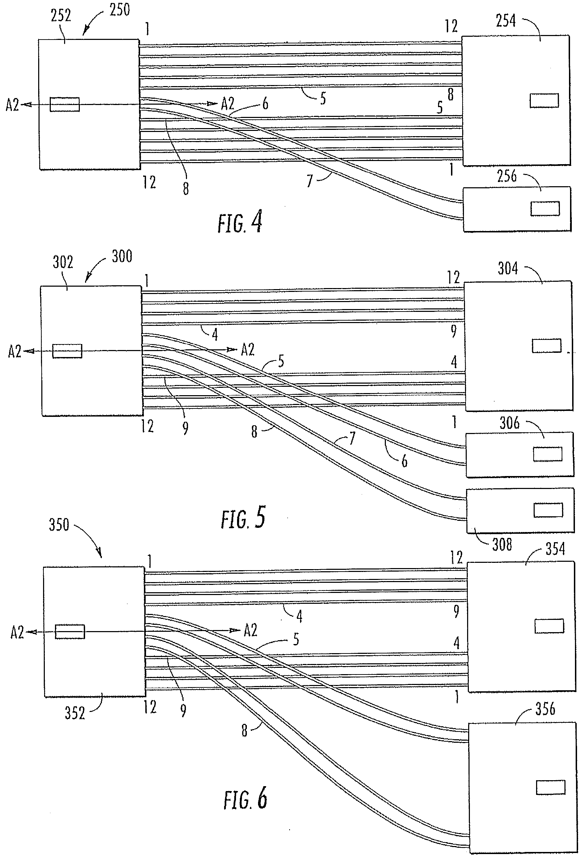

Transition devices that meet the either or both of the two conditions (a) and (b) set forth above can also take other configurations. Referring now to **Figure 4****,** a transition device **250** includes a trunk end terminal **252,** a transceiver end terminal **254** that receives 10 of the 12 fibers that originate at the trunk end terminal **252,** and a transceiver end terminal **256** that receives the other 2 fibers from the trunk end terminal **252.** As can be seen in **Figure 4****,** the transceiver end terminal **254** receives fibers 1-5 and 8-12 (which are sets of mirror image fibers), and transceiver end terminal **256** receives fibers 6 and 7, which are also mirror image fibers. As such, both terminals meet condition (a) above, with the result that proper polarity for attached transceivers can be maintained using two of these devices on either end of a trunk cable such as trunk cable **200.**

Referring now to **Figure 5****,** another transition device, designated broadly at **300,** is illustrated therein. The device **300** includes a trunk end terminal **302** and three transceiver end terminals **304, 306, 308.** Transceiver end terminal **304** receives eight fibers from trunk end terminal **302:** fibers 1-4 and mirror image fibers 9-12. Transceiver end terminals **306, 308** receive two fibers each from trunk end terminal **302;** transceiver end terminal **306** receives fibers 5 and 6, and transceiver end terminal **308** receives fibers 7 and 8 that are mirror image fibers of fibers 5 and 6. Thus, the transceiver end terminal **304** meets condition (a) above, and transceiver end terminals **306, 308** meet condition (b) above, so the device **300** can maintain proper polarity for attached transceivers if two such devices were attached at the ends of a trunk cable such as trunk cable **200.**

Referring now to **Figure 6****,** a device **350** includes a trunk end terminal **352,** an eight fiber (four channel) terminal **354,** and a four fiber (two channel) terminal **356.** The fibers of transceiver end terminal **354** originate from ports 1-4 and 9-12 of trunk end terminal **352,** thus satisfying condition (a) above, and the fibers of transceiver end terminal **356** originate from ports 5-8, thus also satisfying condition (a). As such, two of these devices can maintain proper polarity for attached transceivers if used at opposite ends of a trunk cable such as trunk cable **200.**

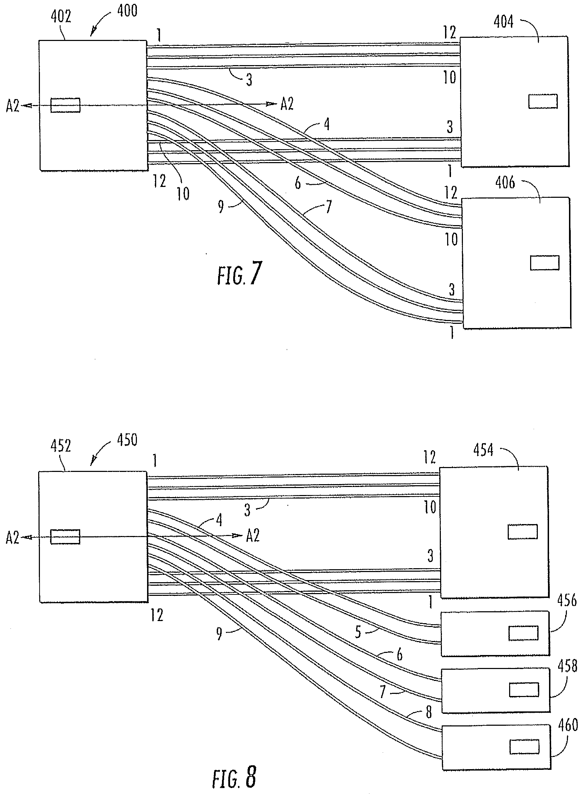

Turning now to **Figure 7****,** a device **400** includes a trunk end terminal **402,** a six fiber transceiver end terminal **404** that receives fibers 1-3 and 10-12 from terminal **402,** and a six fiber transceiver end terminal **406** that receives fibers 4-9 from terminal **402,** Because both transceiver end terminals **404, 406** satisfy condition (a), two of the devices **400** may be used on either end of a trunk cable such as trunk cable **200** and maintain proper polarity for attached transceivers.

Referring now to **Figure 8****,** a device **450** has a trunk end terminal **452,** a six-fiber transceiver end terminal **454,** and three two-fiber transceiver end terminals **456, 458, 460.** The transceiver end terminal **454** receives fibers 1-3 and 10-12 from trunk end terminal **452,** satisfying condition (a). The transceiver end terminals **456** and **460** receive, respectively, the fibers 4 and 5 and the fibers 8 and 9, which are mirror image fibers, thereby satisfying condition (b). Transceiver end terminal **458** receives fibers 6 and 7, which satisfies condition (a). Because all of the transceiver end terminals **454, 456, 458, 460** satisfy either condition (a) or condition (b), two devices **450** can be attached to either end of a trunk cable such as trunk cable **200** and maintain proper polarity for attached transceivers.

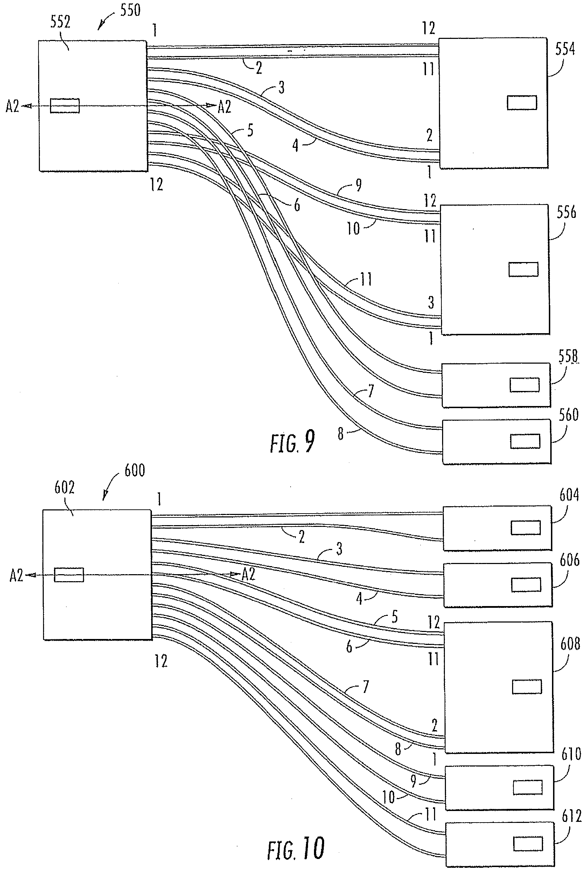

Referring now to **Figure 9****,** a device **550** disclosed therein includes a trunk end terminal **552,** two transceiver end terminals **554, 556,** each of which receives four fibers, and two transceiver end terminals **558, 560,** each of which receives two fibers. The transceiver end terminal **554** receives fibers 1-4, while the transceiver end terminal **556** receives mirror image fibers 9-12, such that these two transceiver end terminals **554, 556** satisfy condition (b) above. The transceiver end terminal **558** receives fibers 5 and 6 and the transceiver end terminal **560** receives mirror image fibers 7 and 8, such that these two transceiver end terminals **558, 560** also satisfy condition (b). As such, two devices **550** can be attached to the ends of a trunk cable such as trunk cable **200** and provide proper polarity for attached transceivers.

**Figure 10** illustrates a transition device **600,** which includes a trunk end terminal **602,** four two fiber transceiver end terminals **604, 606, 610, 612,** and a four fiber transceiver end terminal **608.** The transceiver end terminals **604** and **612** receive mirror image couplets of fibers 1 and 2 and fibers 11 and 12, respectively. The transceiver end terminals **606** and **610** receive mirror image couplets of fibers 3 and 4 and fibers 9 and 10, respectively. The transceiver end terminal **608** receives fibers 5-8. Because the terminals **604, 606, 610** and **612** meet condition (b), and terminal **608** meets condition (a), two devices **600** can maintain proper polarity for attached transceivers when used on either end of a trunk cable such as trunk cable **200.**

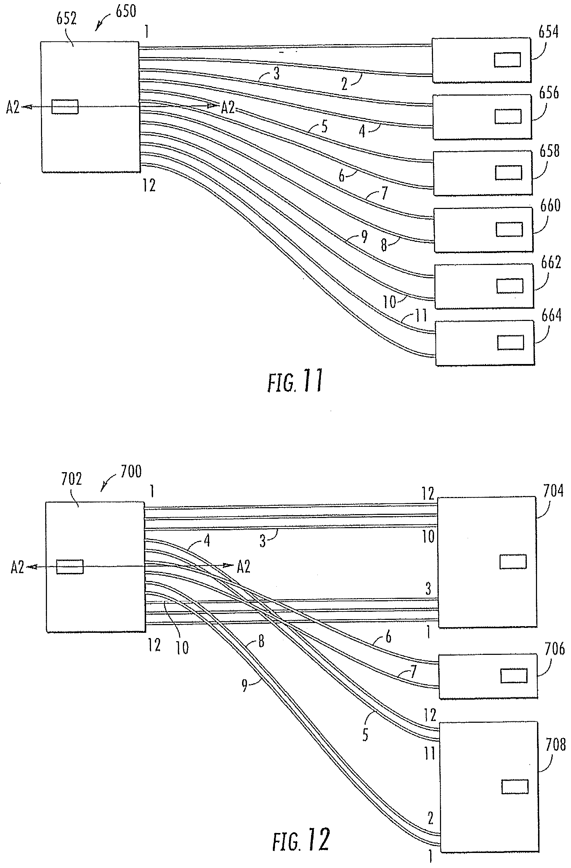

Referring now to **Figure 11****,** the device **650** illustrated therein includes a trunk end terminal **652** and six transceiver end terminals **654, 656, 658, 660, 662, 664.** The transceiver end terminals **654, 656, 658, 660, 662, 664** receive, respectively, fibers 1 and 2, 3 and 4, 5 and 6, 7 and 8, 9 and 10, and 11 and 12. Transceiver end terminals **654** and **664** receive mirror image fibers, as do transceiver end terminals **656, 662** and transceiver end terminals **658, 660.** Because all of the transceiver end terminals meet condition (b), two devices **650** may be employed on either end of a trunk cable such as trunk cable **200** and maintain proper polarity for attached transceivers.

**Figure 12** illustrates a device **700** that includes a trunk end terminal **702** and three transceiver end terminals: a six fiber terminal **704;** a two fiber terminal **706;** and a four fiber terminal **708.** The transceiver end terminal **704** receives mirror image fibers 1-3 and 10-12, the terminal **706** receives mirror image fibers 6 and 7, and the transceiver end terminal **708** receives mirror image fibers 4, 5, 8, and 9. Because all three transceiver end terminals **704, 706, 708** meet condition (a), the device **700** is suitable for use at either end of a trunk cable such as trunk cable **200** to maintain proper polarity for attached transceivers.

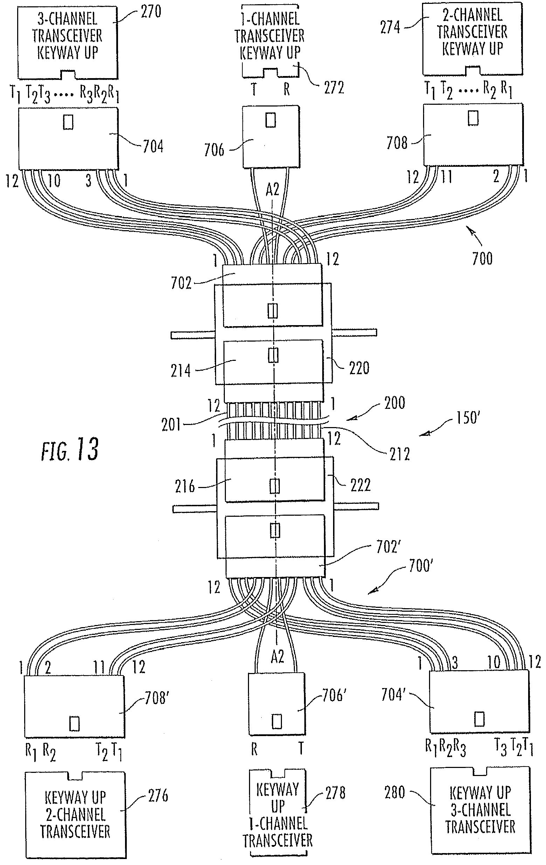

**Figure 13** illustrates a communication system **150'** that employs two identical devices **700, 700'** that connect transceivers **270, 272, 274** with transceivers **280, 278, 276,** respectively, through a trunk cable **200.** The maintenance of polarity between the transceivers can be seen by tracing a signal through each of the proposed channels. For example, starting with the leftmost port of the six-fiber transceiver **270,** a signal is transmitted from transmitter **T1** through the transceiver end terminal **704** and travels along the leftmost fiber (labeled fiber 12 in **Figure 13**) that exits transceiver end terminal **704** to the port labeled position 1 in the trunk end terminal **702.** From here, the signal travels through the terminal **214** of the trunk cable **200** to the leftmost fiber **201** thereof. Continuing along this path, the signal exits the leftmost port of the terminal **216** and enters the leftmost port of the trunk end terminal **702'** of the transition device **700'** (labeled position 12 in **Figure 13**). The signal then travels along the leftmost fiber to the terminal **704'** of the transition device **700',** entering the leftmost port (labeled 1 in **Figure 13**), where it reaches receiver **R1** of the transceiver **280.**

A return signal can then be transmitted from transmitter **T1** of transceiver **280** to receiver **R1** of the transceiver **270.** The signal generated by **T1** travels through the rightmost port (labeled position 12 in **Figure 13**) of the transceiver end terminal **704'** of the transition device **700',** then through the rightmost fiber exiting the terminal **704'** to the rightmost port (labeled position 1 in **Figure 13**) of the trunk end terminal **702'.** The signal then enters the terminal **216** of trunk cable **200** at the rightmost position and travels through the corresponding fiber **212** to the terminal **214,** exiting the rightmost port (labeled 1 in **Figure 13**). The signal then enters the trunk end terminal **702** of the transition device **700** through the rightmost port (labeled position 12 in **Figure 13**), travels along the rightmost fiber connected to the terminal **704,** and enters the rightmost port thereof (labeled position 1). From there, the signal passes through the terminal **704,** enters the transceiver **270,** and is received in the receiver **R1.** Thus, signals can be passed from the transmitter **T1** of transceiver **270** to the receiver **R1** of transceiver **280,** and from the transmitter **T1** of transceiver **280** to the receiver **R1** of transceiver **270,** thereby forming a complete transmit/receive channel between these devices.

Similar tracing of the signal paths of transmitters **T2** and **T3** of transceiver **270** to receivers **R2** and **R3** of transceiver **280** and of transmitters **T2** and **T3** of transceiver **280** to receivers **R2** and **R3** of transceiver **270** shows the presence of two more complete transmit/receive channels. The same exercise can show that the transceivers **272, 278** form one transmit/receive channel, and transceivers **274, 276** form two transmit/receive channels. As such, the interconnection of the transceivers in a "key-up to key-up" arrangement can be accomplished with two identical transition devices **700, 700'.**

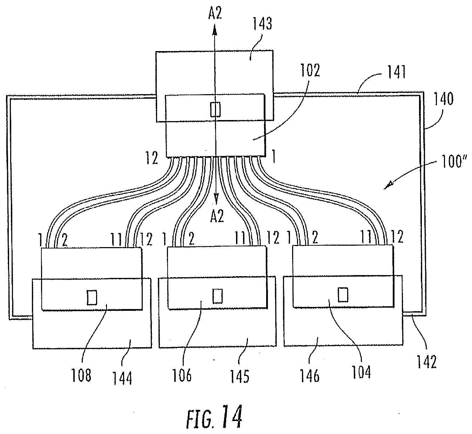

Turning now to **Figure 14****,** a transition device **100"** is shown in the form of a cassette, with a housing **140** having a wall **141** in which an adapter **143** and the trunk end terminal **102** are mounted and an opposing wall **142** in which adapters **144, 145, 146** and the transceiver end terminals **104, 106, 108** are mounted. This configuration may be preferred for some applications. In other applications, a fan-out configuration, in which the terminals are not mounted in a wall, but instead are freely movable relative to each other, may be preferred.

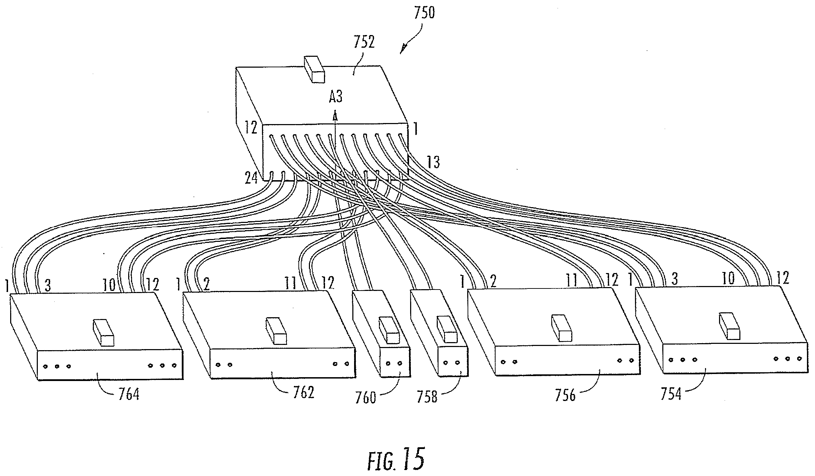

Referring now to **Figure 15****,** a transition device **750** is illustrated therein. The device **750** differs from the previously discussed devices in that it has 24, rather than 12, fibers, and these fibers are arranged in two rows rather than one. The device **750** includes a trunk end terminal **752** from which the fibers originate. The trunk end terminal **752** is configured to connect with a 24-fiber trunk cable. In **Figure 15****,** the upper row of fibers is labeled 1-12 from right to left, and the lower row of fibers is labeled 13-24 from right to left. The device **752** includes six transceiver end terminals: terminals **754** and **764** that receive six fibers each; terminals **756** and **762** that receive four fibers each; and terminals **758** and **760** that receive two fibers each. In the device **750** the fibers are routed from the trunk end terminal **752** to the transceiver end terminals **754-764** in a pattern that repeats on each row to illustrate stacking of the routing of the transition device of **Figure 12** within a multi-row trunk end terminal. Any of the transition device routings of **Figures 2** and **4****-12** may be mixed within the multi-row trunk terminal, each one occupying a row unto itself. In such arrangements, the complete transition device exhibits an axis of symmetry **A3** and the rows comply with either or both of conditions (a) and (b).

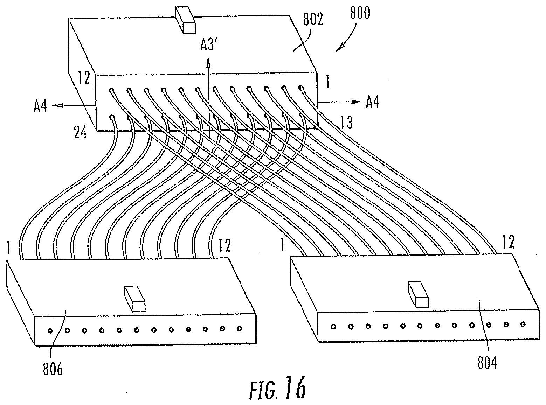

An alternative 24-fiber transition device is shown in **Figure 16** and designated broadly at **800.** The device **800** has a trunk end terminal **802** with 24 fibers originating from two rows. Two transceiver end terminals **804, 806** receive twelve fibers each, with the transceiver end terminal **804** receiving fibers 1-12 and the transceiver end terminal 806 receiving fibers 13-24. Fibers 1-12 are routed to terminal **804** in a way that is compliant to condition (a) about the axis of symmetry **A3'.** Similarly, fibers 13-24 are routed to terminal **805** in a way that is compliant to condition (a) about the axis of symmetry **A3'.**

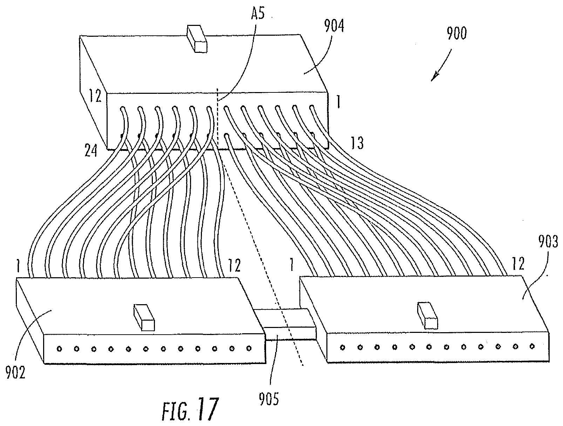

Turning now to **Figure 17****,** an additional example of a 24 fiber transition device, designated broadly at **900,** is shown therein. However, the device **900** is configured to connect with a 24-fiber transceiver and to two 12-fiber trunk cables. This device may be useful to provide connectivity between transceivers having transmit and receive ports symmetrically arranged about the vertical axis of symmetry **A5.** The transition device **900** includes two trunk end terminals **902, 903** that receive 12 fibers each in a single row, and further includes a transceiver end terminal **904** that can connect with a 24-fiber transceiver. The 24 fibers that exit the transceiver end terminal **904** are routed to the trunk end terminals **902, 903** as mirror images of each other about the vertical axis of symmetry **A5.** More specifically, fibers 1-6 of the top row of transceiver end terminal **904** are routed to positions 7-12 of the trunk end terminal **903,** whereas fibers 7-12 of the transceiver end terminal **904** are routed to mirror image positions 1-6 of trunk end terminal **902,** and fibers 13-18 of the lower row of transceiver end terminal **904** are routed to positions 1-6 of trunk end terminal **903,** whereas fibers 19-24 are routed to mirror image positions 7-12 of trunk end terminal **902.** The transceiver end terminals **902, 903** may be connected by a strap **905** that maintains the physical relationship of the terminals to each other.

It has been discovered that polarity between two transceivers can be maintained if the transition devices are configured such that the order of optical fibers within the trunk end terminals and the order of the trunk end terminals with respect to each other within both transition devices are arranged to produce a mirror image pattern of symmetry, the symmetry being achieved when transmitting fibers and corresponding receiving fibers are located in their respective mirror image positions about the centerline of a generally horizontally arranged array of the trunk end terminations. Depending in part on the transceiver signal arrangement, this can be achieved when the arrangement of fibers received by each trunk end terminal meet either of the following three conditions: (i) a first fiber originates from a first port in the transceiver end terminal, and a second fiber originates from a second port in the transceiver end terminal that is positioned at the mirror image location of the first port about the axis of symmetry that divides the transceiver end terminal, the second fiber so originating being positioned in the trunk end terminal at the mirror image location (about an axis of symmetry that divides the trunk end terminal) of the first fiber in the trunk end terminal; (ii) each fiber is received in a first trunk end terminal that has a corresponding second trunk end terminal with the same number and arrangement of trunk ports, and each fiber received in the first trunk end terminal originates from a port in the transceiver end terminal that has a mirror image port about an axis of symmetry from which the fiber that is received in the second trunk end terminal originates, the fiber so originating being positioned in the second trunk end terminal in the port that is in the mirror image location to the position of the first fiber in the first trunk end terminal about an axis of symmetry that divides a generally horizontally arranged array of the first and second trunk end terminals (as is the case with the trunk end terminals **902, 903** above); or (iii) each fiber is received in a first trunk end terminal that has a corresponding second trunk end terminal with the same number and arrangement of trunk ports, and each fiber received in the first trunk end terminal originates from a port in the transceiver end terminal that has a mirror image port about an axis of symmetry from which the fiber that is received in the second trunk end terminal originates, the fiber so originating being positioned in the second trunk end terminal in the port that is in the same location to the position of the first fiber in the first trunk end terminal (as is the case with trunk end terminals **804, 806** about axis of symmetry **A4** above).

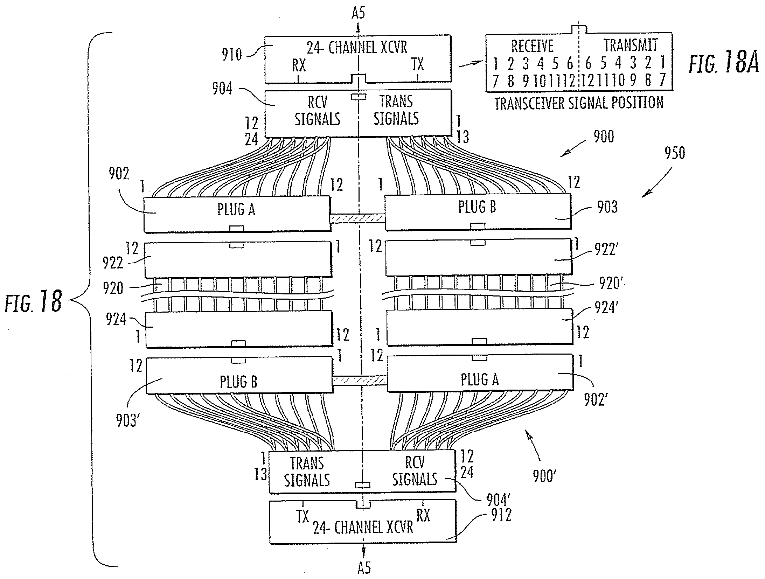

**Figure 18** illustrates a telecommunications system **950** that employs two identical transition devices **900, 900'** of the configuration illustrated in **Figure 17****.** The system **950** connects the two transition devices **900, 900'** with two 12-fiber trunk cables **920, 920'** via 12-fiber array connectors (adapters are not shown - they are typically MPO-type). Each of the transition devices **900, 900'** is connected to a respective 24-fiber transceiver **910, 912.** As can be seen in **Figure 18****,** all of the interconnections of the system **950** are "key-up to key-up" as described above.

The connectivity of the system can be traced by following a signal between the transceivers **910, 912.** For example, following the transmit and receive arrangement for the transceivers shown in **Figure 18A****,** a signal exiting transmitter **T1** (located in the top row on the far right position) travels into the transceiver end terminal **904** and into the rightmost fiber of the upper row (shown as position 1 of the transceiver terminal **904**). The signal travels along this fiber into the rightmost position of the upper row of the trunk end terminal **903** (position 12). The signal then travels through the trunk end terminal **903** and into the rightmost position (position 1) of the terminal **922'** of the trunk cable **920'.** The signal travels through the rightmost fiber of the trunk cable **920'** and exits through the rightmost position of the terminal **924'** (labeled as position 12). The signal then enters the trunk end terminal **902'** of the transition device **900'** at the rightmost position (labeled position 1 in **Figure 18**), travels in the rightmost fiber of the transition device **900',** and enters the transceiver end terminal **904'** in the rightmost position of the upper row (labeled position 12 in **Figure 18**). The signal is then received at receiver **R1** of the transceiver **912,** which is located at the rightmost position of the upper row.

The return signal from the transceiver **912** can then be traced back to the transceiver **910.** The signal exits the transmitter **T1** (in **Figure 18****,** the leftmost position of the upper row of the transceiver **912**), travels through the leftmost position of the upper row of the transceiver end terminal **904'** (labeled as position 1 in **Figure 18**), and further travels through the leftmost fiber of the transition device **900'** to the leftmost position of the trunk end terminal **903'** (labeled as position 12). The signal then travels to and through the terminal **924** of the trunk cable **920** and along the leftmost fiber thereof to the terminal **922,** entering the leftmost position (labeled as position 12 in **Figure 18**). The signal then passes to the leftmost position of the trunk end terminal **902** (labeled position 1) and through the leftmost fiber of the transition device **900** to the transceiver end terminal **904,** where it enters the leftmost position of the upper row (labeled position 12 in **Figure 18**). The signal then passes through the transceiver end terminal **904** and to the transceiver **910,** where it is received in receiver **R1.** Thus, it can be seen that the signal is transmitted from the transmitters **T1** and received in the receivers **R1** of both transceivers **910, 912** to form a complete transmission channel. Similar tracings can be performed for the other channels of the system **950.**

Notably, the system **950** provides proper connectivity for the channels of the transceivers **910, 912** with all of the interconnections of the components being "key-up to key-up" connections. Also, identical 12-fiber trunk cables **920, 920'** can be employed, as can identical transition devices **900, 900'.**

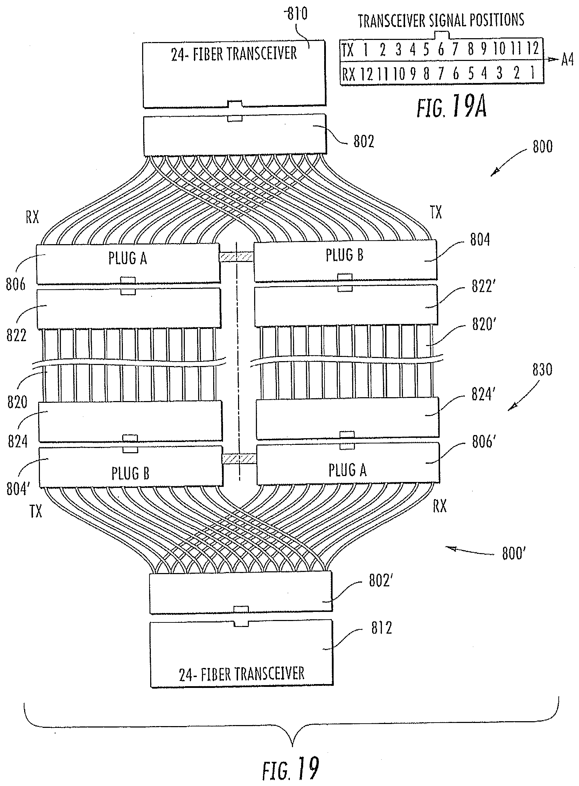

**Figure 19** illustrates that a similar telecommunications system **830** can be created with the transition device **800** illustrated in **Figure 16****.** (It should be noted that the transition device **800** can be used to interconnect either two 24-fiber transceivers, as shown here, with two 12-fiber trunk cables, or four 12-fiber transceivers with a 24-fiber trunk cable. This device meets condition (iii) with respect to the illustrated 24-fiber transceiver of **Figure 19A** and condition (b) with respect to certain 12-fiber transceivers). As seen in **Figure 19****,** the system **830** includes identical transition devices **800, 800'** that connect to respective 24-fiber transceivers **810, 812** via transceiver end terminals **802, 802'.** The transition device **800** connects to two 12-fiber trunk cables **820, 820'** via trunk end terminals **804, 806,** and the transition device **800'** connects to the trunk cables **820, 820'** via trunk end terminals **804', 806'.** The transceivers **810, 812** have their transmit/receive channels arranged as shown in **Figure 19A****,** with the transmitters **T1-T12** located in the upper row from left to right and the receivers **R1-R12** located in the lower row in opposite order to the transmitters, that is from right to left. Transition devices **802, 802'** must meet condition (iii) because of this opposing order. Other transceiver port arrangements are also compatible, such as one in which the transmitters and receivers are interchanged, one in which the orders of the transmitters and the receivers are both reversed, and one in which the transmitters and receivers are interleaved (e.g. T1, R12, T2, R11, T3, R10, T4, R9, T5, R8, T6, R7 on the top transceiver row and T7, R6, T8, R5, T9, R4, T10, R3, T11, R2, T12, R1 on the bottom row). It should be noted that the transceiver arrangement of **Figure 19A** can be viewed as a rearranged extension of that of **Figure 1** wherein the number of transmit and receiver ports has each been increased to twelve, eliminating unused ports, and wherein they are then divided along axis of symmetry **A1** and stacked, transmitters above receivers. Thus the axis of symmetry **A1** in **Figure 1** becomes the axis **A4** in **Figure 19A****.**

As with the systems described above, a signal can be traced to demonstrate the connectivity of the system **830.** A signal transmitted from transmitter **T1** exits the transceiver **810** from the leftmost position of the upper row, passes through the leftmost position of the upper row of transceiver end terminal **802,** and travels along the leftmost fiber routed to the trunk end terminal **804.** From there the signal travels through the terminal **822'** of the trunk cable **820',** along the leftmost fiber thereof, and into the leftmost position of the terminal **824'.** The signal then enters the leftmost position of the trunk end terminal **806',** travels along the leftmost fiber routed to the transceiver end terminal **802'** (where it enters in the leftmost position of the lower row), and enters the transceiver **812** at the leftmost position in the lower row, which corresponds to receiver **R1.** The return path for this channel begins with transmitter **T1** of the transceiver **812,** which is located at the rightmost position of the upper row. The signal enters the rightmost position of the terminal **802',** travels along the rightmost fiber routed to the trunk end terminal **804'** to enter the rightmost position thereof, passes through the terminal **824** of the trunk cable **820,** travels along the rightmost fiber of the trunk cable **820** to the rightmost position of the terminal **822,** passes into the rightmost position of the trunk end terminal **806,** and travels along the rightmost fiber exiting the trunk end terminal **806** to the rightmost position of the lower row of the transceiver end terminal **802,** which positions the signal to reach the receiver **R1** of the transceiver **810.** The remaining channels between the transceivers **810, 812** can similarly be traced. Thus, it can be seen that the use of two identical transition devices **800, 800'** and trunk cables **820, 820'** can connect two 24-fiber transceivers in a key-up to key-up relationship and maintain proper connectivity.

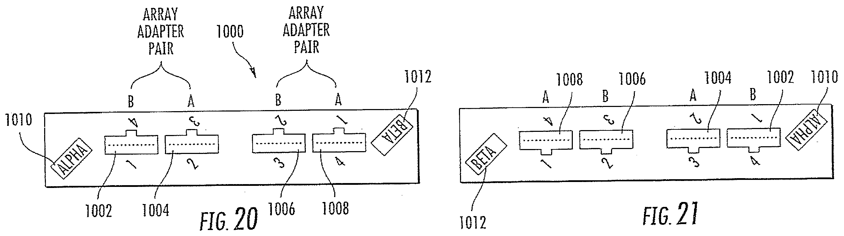

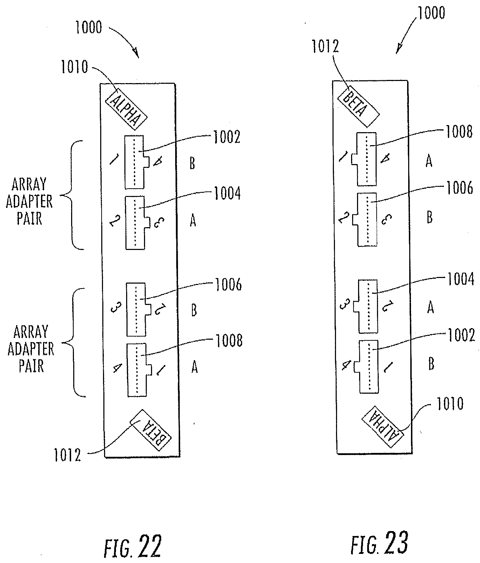

**Figures 20-23** show a patch panel **1000** that can be used to connect transition devices such as those shown in **Figures 16** and **17** to trunk cables. The patch panel **1000** includes four adapter apertures **1002, 1004, 1006, 1008,** which are arranged in "A" and "B" pairs, with their alignment keyways oriented in the same direction. The adapter apertures **1002, 1004, 1006, 1008** are sized to receive trunk cables such as trunk cables **200** and **920** discussed above. A transition device, such as the transition device **900,** would supply trunk end terminals **902, 903** to the patch panel **1000** for interconnection with the trunk cables. The panel **1000** also includes orientation indicia **1010** on one corner thereof and orientation indicia **1012** in the opposite corner thereof. As described in detail in U.S. Patent No. 7,416,347 to Livingston et al., the orientation indicia are themselves oriented such that an "alpha" configuration is indicated when the orientation indicia **1010** is easily read (as in the horizontal orientation of **Figure 20** or the vertical orientation of **Figure 22**), and a "beta" orientation is indicated when the orientation indicia **1012** is easily read (as in the horizontal orientation of **Figure 21** or the vertical orientation of **Figure 23**). Notably, when the orientation is inverted (e.g., the alpha orientation of **Figure 20** versus the beta orientation of **Figure 21**), the positions of the "A" and "B" pairs are reversed: in the alpha configuration, the B apertures **1002, 1006** are positioned on the left side of each pair, whereas in the beta configuration, the A apertures **1004, 1008** are on the left side of each pair).

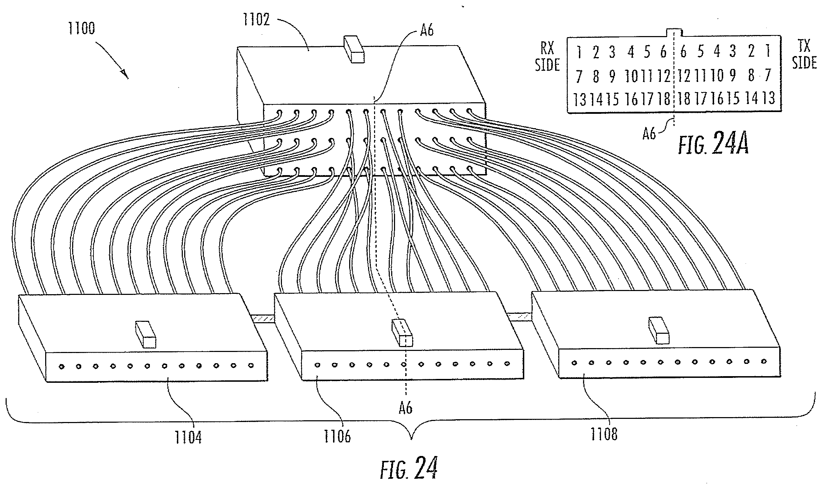

To illustrate that these concepts may also pertain to transceivers with odd numbers of port rows, **Figure 24** shows a 36-fiber transition device **1100** with three rows of twelve fibers each at the transceiver end terminal **1102.** The transition device **1100** includes the transceiver end terminal **1102** and three trunk end terminals **1104, 1106, 1108.** As shown in **Figure 24A** , the transceiver end terminal **1102** has port positions that are numbered 1-6, 7-12 and 13-18 on each side of a vertical axis of symmetry **A6.** Fibers extend from ports 1-4, 7-10 and 13-16 on the left side of the axis **A6** to the trunk end terminal **1104,** where they feed a single row of ports 1-12. Similarly, the fibers in ports 1-4, 7-10 and 13-16 on the right side of axis **A6** feed a single row of ports in trunk end terminal **1108.** As such, the trunk end terminals **1104, 1108** meet condition (ii). Trunk end terminal **1106** receives fibers from ports 5, 6, 11, 12, 17 and 18 from each side of the axis **A6** as a single row, wherein each fiber is routed to a port that is the mirror image of the port to which its mirror image fiber is routed. As such, trunk end terminal **1106** meets condition (i). It can also be seen that the fibers in the trunk end terminals **1104, 1106, 1108** are positioned to produce mirror image order about a central plane that extends through the center of the horizontal arrangement of the trunk end terminals and includes the axis **A6.** As such, two identical transition devices **1100** may be employed in a system with two 36-fiber transceivers and provide proper polarity.

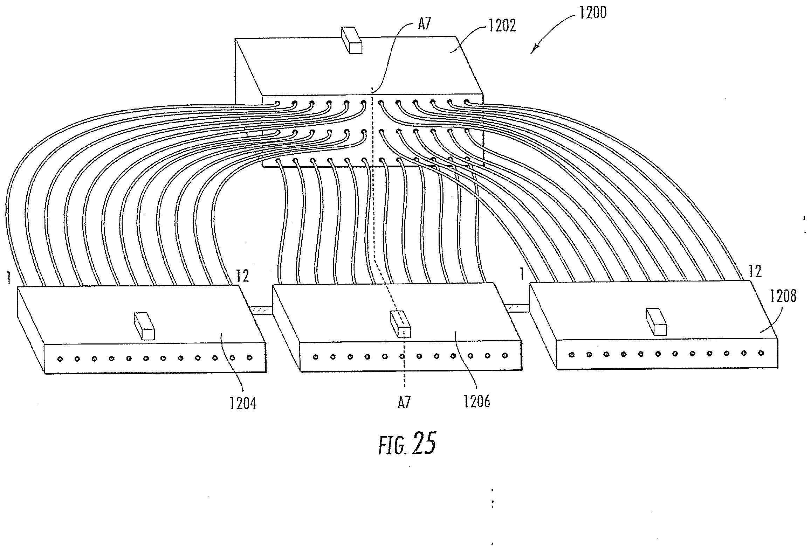

Another 36-fiber transition device **1200** is illustrated in **Figure 25****.** The transition device **1200** includes a transceiver end terminal **1202** with 36 ports arranged in the same three rows and the same numbering scheme as described above for the transition device **1100** and shown in **Figure 24A.** The fibers are routed from ports 1-12 of the transceiver end terminal **1202** to similarly numbered ports in the trunk end terminals **1204,** and to the reverse ordered ports in the trunk end terminal **1208.** Fibers are routed from ports 13-18 on each side of the axis **A7** into a single row in trunk end terminal **1206.** As with the transition device **1100,** the trunk end terminals **1204, 1208** meet condition (ii), and the trunk end terminal **1206** meets condition (i). As such, the arrangement of fibers and trunk end terminals in the transition device **1200** produces a mirror image about a plane that extends through the axis **A7.**

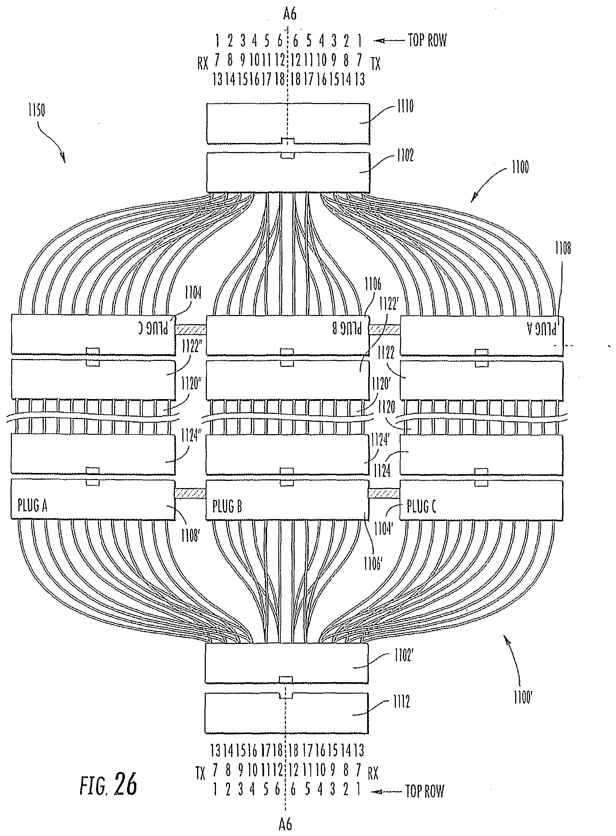

Turning now to **Figure 26****,** a telecommunications system **1150** that utilizes two identical transition devices **1100, 1100'** is illustrated. The system **1150** includes two 36-fiber transceivers **1110, 1112** that are connected with the transition devices and three identical 12-fiber trunk cables **1120, 1120', 1120".** As can be seen in **Figure 26****,** the trunk end terminal **1104** of transition device **1100** is connected to the trunk end terminal **1108'** of the transition device **1100'** via the trunk cable **1120",** the trunk end terminal **1106** is connected to the trunk end terminal **1106'** via trunk cable **1120',** and the trunk end terminal **1108** is connected to the trunk end terminal **1104'** via the trunk cable **1120.**

To demonstrate the connectivity of the system **1150,** a signal starting at position 1 on the right side of the upper row of the transceiver **1110** (*i.e.,* from transmitter **T1**) passes through the transceiver end terminal **1102** and into the rightmost fiber of the transition device **1100.** From there, the signal passes through the rightmost port of the trunk end terminal **1108** and into the rightmost fiber of the trunk cable **1120.** The signals then travels through the rightmost port of the trunk end terminal **1104'** and into the rightmost fiber of the transition device **1100'.** The signal is then routed through the rightmost port of the upper row of the transceiver end terminal **1102'** and into the transceiver **1112,** where it is received by receiver **R1** at position 1. The return path begins at transmitter **T1,** from where the signal passes (a) through the leftmost position of the upper row of the transceiver end terminal **1102',** (b) along the leftmost fiber of the transition device **1100',** (c) through the leftmost port of the trunk end terminal **1108',** (d) along the leftmost fiber of the trunk cable **1120",** (e) into and through the leftmost port of the trunk end terminal **1104,** (f) along the leftmost fiber of the transition device **1100,** and (g) into and through the leftmost port of the upper row of the transceiver end terminal **1102,** where it is received at the receiver **R1.** Similar tracings can be performed for the other channels of the system to demonstrate proper connectivity. Thus, it can be seen that the system **1150** maintains proper polarity between the transceivers **1110, 1112** with two identical transition devices **1100, 1100'** and three identical trunk cables **1120, 1120', 1120".**

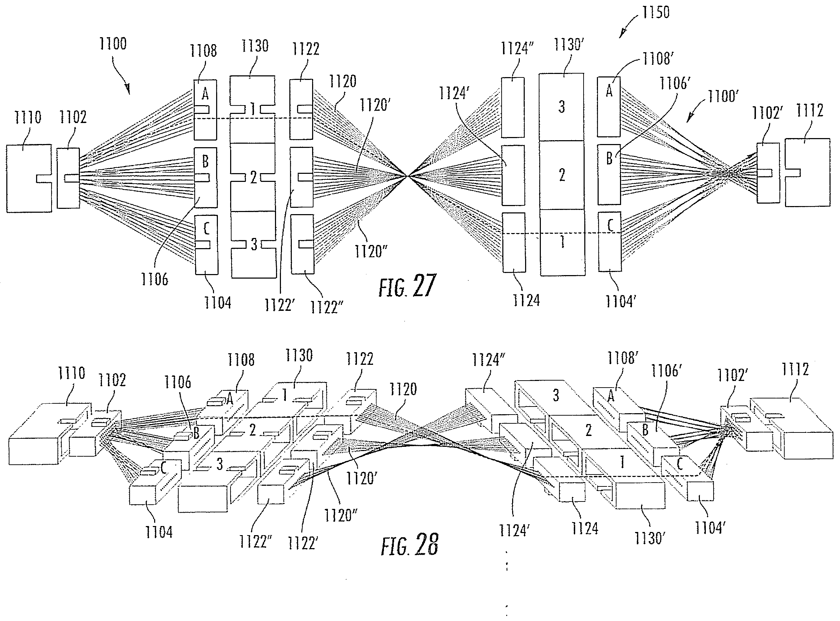

Turning now to **Figures 27** and **28****,** it can be seen that example systems, and in particular the system **1150** illustrated in **Figure 27****,** can be inverted to facilitate operations. Note that Figures 27 and 28 show the same system in two different perspectives for clarity. For maintenance, testing and administration purposes, it may be advantageous to route signals so that the signals entering panel position 1 at one end of a trunk cable exit position 1 at the other end. To accomplish this, adapters (designated at **1130** and **1130'** in **Figures 27** and **28**) can be rotated as a ganged group from keyways-up on one cable end (i.e., where terminals **1122, 1122', 1122"** connect with adapter **1130**) to keyways-down on the opposite cable end (i .e., where terminals **1124, 1124', 1124"** connect with adapter **1130'**). Inverting the keyways so that they face downwardly on one end allows spatial position of signals to be the same on panels at both ends of the cable. To achieve this arrangement and maintain connectivity, the trunk cables **1120, 1120', 1120"** are shown with a twist that is imparted by this adapter rotation. Similarly, because the trunk end terminals **1104', 1106', 1108'** are oriented with their keyways facing downwardly to attach to the adapter **1130',** the fibers of the transition device **1100'** are shown with a twist so that the transceiver end terminal **1102'** is still oriented in a "key-up" orientation to connect with transceiver **1112.** Those skilled in this art will recognize that similar arrangements with others of the systems illustrated and discussed herein may also be employed.

Those skilled in this art will appreciate that other transition devices may also be employed in the example systems disclosed herein. As one example, the device **100** may be modified such that one transceiver end terminal would receive fibers 1, 2, 11 and 12, another would receive fibers 3, 4, 9 and 10, and a third would receive fibers 5-8, as each of these transceiver end terminals would meet condition (b). As another example, multi-row transceivers with even numbers of rows may employ a modified version of the arrangement of **Figure 16** with all of the transmitters in the top half of the rows and all of the receivers in the bottom half of the rows.

## Claims

1. A transition device (700, 700') for an optical fiber connection system, the transition device adapted to interconnect a trunk cable (200) with a plurality of transceivers (270, 272, 274, 276, 278, 280), the transition device comprising:
a first set of at least four optical fibers, each of the optical fibers having a trunk end and a transceiver end;
a single trunk end terminal (702, 702') having a plurality of trunk ports, each trunk port connected with a respective one of the first set of at least four optical fibers at its trunk end, wherein a first axis of symmetry (A2) divides the trunk ports; and
a plurality of transceiver end terminals (704, 706, 708, 704', 706', 708'), each of the transceiver end terminals having even numbers of transceiver ports, each of the transceiver ports receiving a respective one of the first set of at least four optical fibers at their transceiver ends;
wherein the fibers received by each transceiver end terminal meet either of the following two conditions:
(a) a first fiber originates from a first trunk port in the trunk end terminal, and a second fiber originates from a second trunk port in the trunk end terminal that is positioned at the mirror image location of the first trunk port about the first axis of symmetry; or
(b) each fiber is received in a first transceiver end terminal that has a corresponding second transceiver end terminal with the same number and arrangement of transceiver ports, and each fiber received in the first transceiver end terminal originates from a trunk port in the trunk end terminal that has a mirror image trunk port about the first axis of symmetry from which a fiber that is received in the second transceiver end terminal originates;
**characterised in that**
at least one of the transceiver end terminals has a different number of transceiver ports than at least one of the other transceiver end terminals.

2. The transition device (700, 700') defined in claim 1, wherein the trunk end terminal (702, 702') has an alignment key.

3. The transition device (700, 700') defined in claim 1, wherein the first set of at least four optical fibers comprises 12 optical fibers.

4. The transition device (700, 700') defined in claim 1, wherein the trunk ports of the trunk end terminal (702, 702') are arranged in a row, and wherein the first axis of symmetry (A2) is generally perpendicular to the row of trunk ports.

## Patentansprüche

1. Umschaltvorrichtung (700, 700') für ein Glasfaserverbindungssystem, wobei die Umschaltvorrichtung dazu ausgelegt ist, ein Stammkabel (200) mit einer Vielzahl von Sendeempfängern (270, 272, 274, 276, 278, 280) zu verbinden, wobei die Umschaltvorrichtung Folgendes umfasst:
einen ersten Satz von zumindest vier Glasfasern, wobei jede der Glasfasern ein Stammende und ein Sendeempfängerende aufweist;
einen Einzelstammendanschluss (702, 702'), der eine Vielzahl von Stammports aufweist, wobei jeder Stammport mit einem jeweiligen von dem ersten Satz von zumindest vier Glasfasern an seinem Stammende verbunden ist, wobei eine erste Symmetrieachse (A2) die Stammports teilt; und
eine Vielzahl von Sendeempfängerendanschlüssen (704, 706, 708, 704', 706', 708'), wobei jeder der Sendeempfängerendanschlüsse gerade Anzahlen an Sendeempfängerports aufweist, wobei jeder der Sendeempfängerports einen jeweiligen von dem ersten Satz von zumindest vier Glasfasern an ihren Sendeempfängerenden empfängt;
wobei die Fasern, die durch jeden Sendeempfängerendanschluss aufgenommen sind, eine der folgenden zwei Bedingungen erfüllen:
(a) eine erste Faser stammt von einem ersten Stammport in dem Stammendanschluss und eine zweite Faser stammt von einem zweiten Stammport in dem Stammendanschluss, der an der Spiegelbildstelle des ersten Stammports um die erste Symmetrieachse positioniert ist; oder
(b) jede Faser ist in einem ersten Sendeempfängerendanschluss aufgenommen, der einen entsprechenden zweiten Sendeempfängerendanschluss mit der gleichen Anzahl und Anordnung an Sendeempfängerports aufweist, und jede Faser, die in dem ersten Sendeempfängerendanschluss aufgenommen ist, stammt von einem Stammport in dem Stammendanschluss, der einen Spiegelbildstammport um die erste Symmetrieachse aufweist, von dem eine Faser stammt, die in dem zweiten Sendeempfängerendanschluss aufgenommen ist;
**dadurch gekennzeichnet, dass**
zumindest einer von den Sendeempfängerendanschlüssen eine andere Anzahl an Sendeempfängerports als zumindest einer von den anderen Sendeempfängerendanschlüssen aufweist.

2. Umschaltvorrichtung (700, 700') nach Anspruch 1, wobei der Stammendanschluss (702, 702') einen Ausrichtungsschlüssel aufweist.

3. Umschaltvorrichtung (700, 700') nach Anspruch 1, wobei der erste Satz von zumindest vier Glasfasern 12 Glasfasern umfasst.

4. Umschaltvorrichtung (700, 700') nach Anspruch 1, wobei die Stammports des Stammendanschlusses (702, 702') in einer Reihe angeordnet sind und wobei die erste Symmetrieachse (A2) im Allgemeinen senkrecht zu der Reihe von Stammports ist.

## Revendications

1. Dispositif de transition (700, 700') pour un système de connexion par fibre optique, le dispositif de transition étant adapté pour interconnecter un câble de liaison (200) à une pluralité d'émetteurs-récepteurs (270, 272, 274, 276, 278, 280), le dispositif de transition comprenant :
un premier ensemble d'au moins quatre fibres optiques, chacune des fibres optiques possédant une extrémité côté liaison et une extrémité côté émetteur/récepteur ;
un unique module d'extrémité côté liaison (702, 702') possédant une pluralité de ports côté liaison, chaque port côté liaison étant connecté à l'une respective du premier ensemble d'au moins quatre fibres optiques au niveau de son extrémité côté liaison, dans lequel un premier axe de symétrie (A2) divise les ports côté liaison ; et
une pluralité de modules d'extrémité côté émetteur/récepteur (704, 706, 708, 704', 706', 708'), chacun des modules d'extrémité côté émetteur/récepteur possédant un nombre pair de ports côté émetteur/récepteur, chacun des ports côté émetteur/récepteur recevant l'une respective du premier ensemble d'au moins quatre fibres optiques au niveau de leur extrémité côté émetteur/récepteur ;
dans lequel les fibres reçues par chaque module d'extrémité côté émetteur-récepteur remplissent l'une des deux conditions suivantes :
(a) une première fibre provient d'un premier port côté liaison dans le module d'extrémité côté liaison, et une deuxième fibre provient d'un deuxième port côté liaison dans le module d'extrémité côté liaison qui est positionné à l'emplacement en image miroir du premier port côté liaison par rapport au premier axe de symétrie ; ou
(b) chaque fibre est reçue dans un premier module d'extrémité côté émetteur-récepteur qui a un deuxième module d'extrémité côté émetteur-récepteur correspondant avec le même nombre et le même agencement de ports côté émetteur-récepteur, et chaque fibre reçue dans le premier module d'extrémité côté émetteur-récepteur provient d'un port côté liaison dans le module d'extrémité côté liaison qui a un port côté liaison en image miroir par rapport au premier axe de symétrie depuis lequel provient une fibre qui est reçue dans le deuxième module d'extrémité côté émetteur-récepteur ;
**caractérisé en ce qu'**au moins un des modules d'extrémité côté émetteur-récepteur présente un nombre de ports côté émetteur-récepteur différent de celui d'au moins un des autres modules d'extrémité côté émetteur-récepteur.

2. Dispositif de transition (700, 700') selon la revendication 1, dans lequel le module d'extrémité côté liaison (702, 702') possède une clé d'alignement.

3. Dispositif de transition (700, 700') selon la revendication 1, dans lequel le premier ensemble d'au moins quatre fibres optiques comprend 12 fibres optiques.

4. Dispositif de transition (700, 700') selon la revendication 1, dans lequel les ports côté liaison du module d'extrémité côté liaison (702, 702') sont agencés en une rangée, et dans lequel le premier axe de symétrie (A2) est globalement perpendiculaire à la rangée de ports côté liaison.
